Europäisches Patentamt

European Patent Office

Office européen des brevets

(11) Veröffentlichungsnummer: **0 293 896**
**A2**

(12) # EUROPÄISCHE PATENTANMELDUNG

(21) Anmeldenummer: 88108865.2

(51) Int. Cl.⁴: **F16D 65/12**

(22) Anmeldetag: 03.06.88

(30) Priorität: 04.06.87 DE 3718647

(43) Veröffentlichungstag der Anmeldung:
07.12.88 Patentblatt 88/49

(84) Benannte Vertragsstaaten:
**DE ES FR GB IT SE**

(71) Anmelder: **FORD-WERKE
AKTIENGESELLSCHAFT**
**Werk Köln-Niehl Henry-Ford-Strasse**
**Postfach 60 40 02**
**D-5000 Köln 60(DE)**

(84) **DE IT SE**

(71) Anmelder: **FORD MOTOR COMPANY LIMITED**
**Eagle Way**
**Brentwood Essex CM13 3BW(GB)**

(84) **GB**

(71) Anmelder: **FORD FRANCE SOCIETE ANONYME**
**344 Avenue Napoléon Bonaparte B.P. 307**
**F-92506 Rueil Malmaison Cedex(FR)**

(84) **FR**

(71) Anmelder: **Ford Motor Company**
**One Parklane Boulevard Parklane Towers
East**
**Dearborn Michigan 48126(US)**

(84) **ES**

(72) Erfinder: **Schlösser, Heinz**
**Mainweg 55**
**D-5000 Köln 80(DE)**

(74) Vertreter: **Ritzkowsky, Harald, Dipl.-Ing. et al**
**Ford-Werke Aktiengesellschaft**
**Patentabteilung NH/DRP Henry-Ford-Strasse**
**D-5000 Köln 60(DE)**

(54) **Bremsscheibe, insbesondere für Scheibenbremsen von Kraftfahrzeugen.**

(57) Bei einer Bremsscheibe, insbesondere für Scheibenbremsen von Kraftfahrzeugen, die aus einem härtbaren Eisenmaterial besteht und die an ihren Reibflächen gehärtet ist, sind die Reibflächen (5 und 6) beider Seiten durch Induktionshärten, Elektronenstrahl- oder Laserstrahlhärten mit gehärteten Oberflächen-Teilbereichen (7, 8 und 9 bzw. 7´, 8´ und 9´) und ungehärteten Oberflächen-Teilbereichen (10 bzw. 10´) versehen, derart, daß in den von den Bremsbelägen einer Bremszange übergriffenen Flächenbereichen bei wechselseitigem Versatz jeweils ein ungleiches Verhältnis von gehärteten und ungehärteten Oberflächen-Teilbereichen (7, 8 und 9 bzw. 10) vorliegt.

FIG.1

## Bremsscheibe, insbesondere für Scheibenbremsen von Kraftfahrzengen

Die Erfindung bezieht sich auf eine Bremsscheibe, insbesondere für Scheibenbremsen von Kraftfahrzeugen der im Oberbegriff des Patentanspruches 1 erläuterten Art.

Aus der DE-AS 27 06 597 ist eine Bremsscheibe, insbesondere für Scheibenbremsen von Kraftfahrzeugen, im speziellen Fall von Motorrädern, bekannt, die aus einem härtbaren Eisenmaterial besteht und an ihren Reibflächen gehärtet ist.

Diese bekannte Bremsscheibe weist den Nachteil auf, daß sie zum einen aus einem verhältnismäßig hoch legierten Eisenmaterial besteht, das teuer ist und daß sie zum zweiten unmittelbar aus einer Warmbehandlung auf Warmverformungstemperatur nachfolgend einer Warmverformung durch Abschrecken durchgehärtet wird, wodurch entsprechend aufwendige Formpressen zum Vermeiden von Härteverzügen erforderlich sind. Durch dieses Durchhärten wird ein Mischgefüge aus Martensit und Ferrit oder Martensit, Ferrit und Zementit erreicht, daß auf einer verhältnismäßig geringen Härte von 36° Rockwell eingestellt wird, damit nicht ein übermäßiges Gleiten der Bremsbeläge auf den Reibflächen der gehärteten Bremsscheibe auftritt.

Aus der DE-AS 22 57 176 ist eine Bremsscheibe, insbesondere für Scheibenbremsen von Kraftfahrzeugen bekannt, die zur Vermeidung des Gleitens der Bremsbeläge auf den Reibflächen der Bremsscheibe und zur Vermeidung von Bremsenquietschen mit einer Vielzahl von Querbohrungen versehen ist, die sowohl als gegossene Öffnungen oder als gebohrte Öffnungen vorgesehen werden können.

Aus der US-PS 40 93 842 ist ein Verfahren zum selektiven Oberflächenhärten von Zylinderbohrungen in Gußeisen-Bauteilen in bestimmten Oberflächenbereichen bekannt.

Bei diesem bekannten Härteverfahren sollen spiralförmige Linienbereiche oberflächengehärtet werden.

Die Aufgabe der Erfindung ist es, eine Bremsscheibe der im Oberbegriff des Patentanspruches 1 erläuterten Art derart zu verbessern, daß mit geringem Bearbeitungsaufwand eine erhebliche Verringerung des Bremsscheibenverschleißes erzielt wird, ohne daß die Bremsscheibe hierdurch zu einer geringeren Bremswirkung oder einem stärkerem Bremsquietschen neigt.

Gemäß der Erfindung wird diese Aufgabe gelöst, indem eine Bremsscheibe der im Oberbegriff des Patentanspruches 1 erläuterten Art die im Kennzeichenteil des Patentanspruches 1 aufgezeigten Merkmale aufweist.

Der Patentanspruch 2 erläutert eine zweckmäßige Auslegung des Härtevorganges.

Dadurch, daß die Reibflächen beider Seiten durch Induktionshärten, Elektronenstrahl- oder Laserstrahl-Härten mit gehärteten und ungehärteten Oberflächen-Teilbereiche versehen sind, derart, daß in den von den Bremsbelägen einer Bremszange übergriffenen Flächenbereichen bei wechselseitigem Versatz jeweils ein ungleiches Verhältnis von gehärteten und ungehärteten Oberflächen-Teilbereichen vorliegt, wird durch den Wechsel von gehärteten und ungehärteten Flächen und dem damit verbundenen unterschiedli chen Reibungskoeffizienten ein mögliches Gleiten, d.h. eine Verringerung der Bremswirkung und eine erhöhte Geräuschbildung, d.h. eine Neigung zum Bremsenquietschen vermieden.

Dadurch, daß die asynchronen Härtebilder auf den Reibflächen durch eine Einhärtung mit Selbstabschreckung so erzeugt werden, daß auf den Reibflächen die Planheit der Oberfläche sowie die Parallelität innerhalb engster Toleranzen erhalten bleibt, wird eine Nachbearbeitung der Bremsscheibe nachfolgend dem Härtevorgang vermieden.

Die Erfindung wird anhand eines in der beiliegenden Zeichnung gezeigten ausführungsbeispieles näher erläutert. Es zeigt:

Fig. 1 eine schematische Schrägrißansicht einer Bremsscheibe gemäß der Erfindung aus der der wechselseitige Versatz der "Härtebilder" ersichtlich ist;

Fig. 2 eine Seitenansicht einer Bremsscheibe gemäß der Erfindung mit einer möglichen Ausführungsform der "Härtebilder" und

Fig. 3 eine schematische Seitenansicht einer Bremsscheibe gemäß der Erfindung in dem vom Bremsbelag einer Bremszange übergriffenen Bereich.

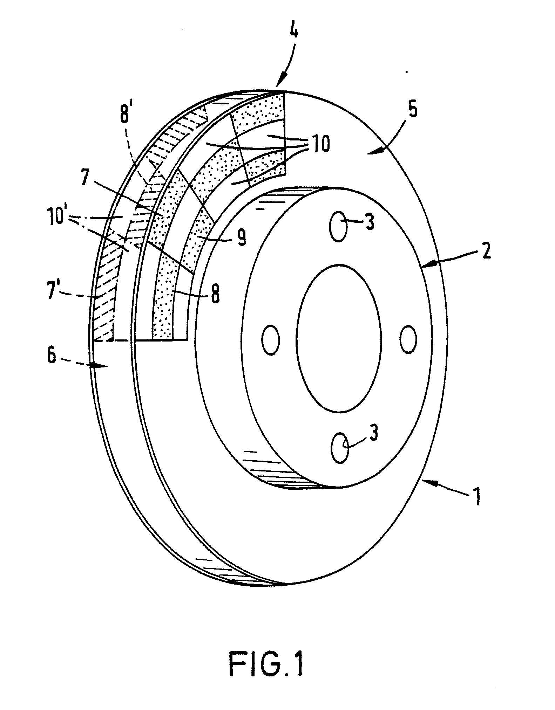

Die in Fig. 1 gezeigte Bremsscheibe 1 einer Scheibenbremse für ein Kraftfahrzeug weist in bekannter Weise einen Nabenteil 2 mit Befestigungsbohrungen 3 auf, der den eigentlichen Scheibenteil 4 mit den beiden ebenen Reibflächen 5 und 6 trägt.

Gemäß der Erfindung sind die Reibflächen 5 und 6 zu beiden Seiten des Scheibenteiles 4 durch Induktionshärten, Elektronenstrahl- oder Laserstrahlhärten oder ähnlichen Verfahren der Oberflächenhärtung in Oberflächen-Teilbereichen 7, 8 und 9 bzw. 7', 8' und 9' in einen gehärteten Oberflächenzustand gebracht, wohingegen die zwischen diesen Oberflächen-Teilbereichen verbleibenden Oberflächen 10 bzw. 10' im ungehärteten Oberflächenzustand verbleiben.

Im vorliegenden Ausführungsbeispiel besteht das aus den gehärteten Oberflächen-Teilbereichen gebildete "Härtebild" aus drei konzentrischen Bogenflächen, die zueinander in Umfangsrichtung versetzt sind.

Durch die schematische Schrägrißdarstellung der Fig. 1, in der die Bremsscheibe als durchsichtiger Körper angenommen wird, soll die wechselseitig versetzte Anordnung dieser "Härtebilder" zueinander klarer erkennbar gemacht werden.

Bei der Auslegung der auf den Reibflächen der Bremsscheibe entstehenden "Härtebilder" müssen die von den Bremsbelägen einer Bremszange übergriffenen Flächenbereiche 11 oder 11' berücksichtigt werden, die durch dicke Strich-Punkt-Linien angedeutet sind. Die gehärteten Oberflächen-Teilbereiche 7, 8 und 9 in ihrer wiederkehrenden Anordnung auf der einen Reibfläche 5 sind in einer übereinstimmenden Punktierung festgehalten, wohingegen die auf der anderen Reibfläche 6 der Bremsscheibe wechselseitig versetzt angeordneten gehärteten Oberflächen-Teilbereiche 7', 8' und 9' durch eine Strichlierung hervorgehoben sind.

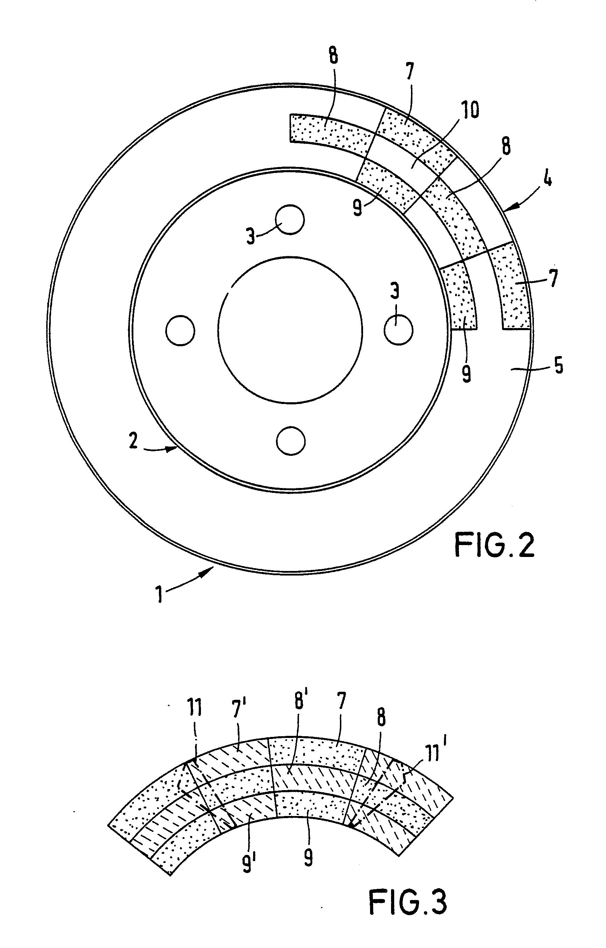

Es muß noch darauf hingewiesen werden, daß bei der in Fig. 3 gezeigten Ausführungsform die auf der vorderen Reibfläche 5 verbleibenden ungehärteten Oberflächen-Teilbereiche 10 im wesentlichen mit dem Bild der gehärteten Oberflächen-Teilbereiche 7', 8' und 9' auf der anderen Reibfläche 6 der Bremsscheibe übereinstimmen. Die auf der Reibfläche 6 verbleibenden ungehärteten Oberflächen-Teilbereiche 10' entsprechen in ihrem Bild den gehärteten Oberflächen-Teilbereichen auf der vorderen Reibfläche 5.

Durch den Wechsel von gehärteten und ungehärteten Oberflächen-Teilbereichen und den damit verbundenen unterschiedlichen Reibungskoeffizienten wird ein mögliches Gleiten der Bremsbeläge an den Bremsscheiben und damit eine verringerte Bremswirkung vermieden und gleichzeitig eine erhöhte Geräuschbildung und dadurch eine Neigung zum Bremsquietschen unterdrückt.

Mit den aufgezeigten, an sich bekannten Oberflächen-Härteverfahren kann während des Härtevorganges die auf den Reibflächen entstehenden asynchronen "Härtebilder" in ihrer Einhärtung und Selbstabschreckung so gesteuert werden, daß die Planheit der Reibflächen sowie die Parallelität der beiden Reibflächen innerhalb engster Toleranzen gehalten werden kann, die keine oder nur eine geringe Nachbearbeitung erforderlich machen.

Selbstverständlich sind im Rahmen der Erfindung die verschiedensten geometrischen "Härtebilder" bei der Auslegung der Oberflächen-Teilbereiche möglich, sofern auf die ungleichmäßige und wechselseitige Beaufschlagung dieser "Härtebilder" durch die Bremsbeläge geachtet wird.

## Ansprüche

1. Bremsscheibe, insbesondere für Scheibenbremsen von Kraftfahrzeugen, die aus einem härtbaren Eisenmaterial besteht und an ihren Reibflächen gehärtet ist, **dadurch gekennzeichnet**, daß die Reibflächen (5 und 6) beider Seiten durch Induktionshärten, Elektronenstrahl- oder Laserstrahlhärten mit gehärteten Oberflächen. Teilbereichen (7, 8 und 9 bzw. 7', 8' und 9') und ungehärteten Oberflächen-Teilbereichen (10 bzw. 10') versehen sind, derart, daß in den von den Bremsbelägen einer Bremszange übergriffenen Flächenbereichen (11) bei wechselseitigem Versatz jeweils ein ungleiches Verhältnis von gehärteten und ungehärteten Oberflächen-Teilbereichen (7, 8 und 9 bzw. 10) vorliegt.

2. Bremsscheiben nach Anspruch 1, **dadurch gekennzeichnet**, daß die asynchronen "Härtebilder" (7, 8 und 9 bzw. 7', 8' und 9') auf den beiden Reibflächen (5 und 6) durch Einhärtung mit Selbstabschreckung so gesteuert werden, daß auf den Reibflächen (5 und 6) die Planheit der Oberfläche sowie die Parallelität innerhalb engster Toleranzen gehalten wird und dadurch keine oder nur eine geringe Nacharbeit erforderlich wird.

FORD/D-746 E

FIG.1

**FIG.2**

**FIG.3**